# EUROPÄISCHE PATENTSCHRIFT

(11) **EP 1 483 140 B1**
(45) Veröffentlichungstag und Bekanntmachung des Hinweises auf die Patenterteilung: **14.11.2007**
(21) Anmeldenummer: 02792645.0
(22) Anmeldetag: 07.12.2002
(51) Int. Cl.: B60S 1/08

(54) **VERFAHREN ZUR FIXIERUNG EINES SENSORMITTELS**
METHOD FOR FIXING A SENSING MEANS
PROCEDE DE FIXATION D'UN ELEMENT CAPTEUR

(30) Priorität: 05.03.2002 DE 10209615
(43) Veröffentlichungstag der Anmeldung: 08.12.2004
(73) Patentinhaber: ROBERT BOSCH GMBH, 70442 Stuttgart (DE)
(72) Erfinder: KURFISS, Frank, 75417 Muehlacker (DE); SEGER, Ulrich, 71106 Magstadt (DE); APEL, Uwe, 72666 Neckartailfingen (DE); SKUPPIN, Andre, 71701 Schwieberdingen (DE)
(86) Internationale Anmeldenummer: PCT/DE2002/004495
(87) Internationale Veröffentlichungsnummer: WO 2003/074333

(56) Entgegenhaltungen:
- EP-A- 0 660 377
- EP-A- 0 803 414
- EP-A- 0 997 360
- FR-A- 2 659 344
- US-A- 5 556 493
- PATENT ABSTRACTS OF JAPAN vol. 1999, no. 09, 30. Juli 1999 (1999-07-30) & JP 11 094731 A (NIPPON SHEET GLASS CO LTD), 9. April 1999 (1999-04-09)
- PATENT ABSTRACTS OF JAPAN vol. 016, no. 165 (M-1238), 21. April 1992 (1992-04-21) & JP 04 012826 A (TOPPAN PRINTING CO LTD), 17. Januar 1992 (1992-01-17)

## Beschreibung

### Stand der Technik

Die Erfindung geht aus von einem Verfahren zur Fixierung eines Sensormittels. Es ist allgemein bekannt, an einer Glasscheibe, insbesondere an der Glasscheibe eines Kraftfahrzeugs, beispielsweise der Windschutzscheibe, ein Messmittel, beispielsweise einen optischen Sensor, anzubringen. Im Betrieb führen jedoch verschiedene äussere Einflüsse zur Beeinträchtigung der Messfunktion. Hierzu gehören beispielsweise das Einstauben, die Betauung der Glas- beziehungsweise der Messmittel-Oberfläche nach Temperaturwechsel in ungünstigem Klima, der Niederschlag von Ausgasungen aus Kunststoffen oder die Belastung mit Alltagsgasen, beispielsweise Zigarettenrauch.

Die japanische Offenlegungsschrift JP 11 094731, siehe Oberbegriff des Anspruchs 1, offenbart einen Regensensor, der an der Innenseite einer Windschutzscheibe befestigt ist. Zwischen einem Glassubstrat und der Windschutzscheibe ist ein abgedichteter Raum vorgesehen, wobei der Raum ein Vakuum enthält.

### Vorteile der Erfindung

Das erfindungsgemäße Verfahren hat demgegenüber den Vorteil, dass ein dichter, beziehungsweise abgedichteter Anschluß des Messmittels an die Glasscheibe möglich ist, so dass die im-Betrieb auftauchenden Beeinträchtigungen wie Einstauben, Betauung und dergleichen nicht zu einer Beeinträchtigung der Messfunktion des Messmittels führen.

Durch die in den Unteransprüchen aufgeführten Maßnahmen sind vorteilhafte Weiterbildungen und Verbesserungen des Verfahrens möglich.

Besonders vorteilhaft ist es, dass in dem Anschlussraum eine maximale Wasserdampfmenge derart vorgesehen ist, dass bei vorgesehen Betriebsbedingungen die relative Feuchte unterhalb von 100% liegt. Hierdurch wird gewährleistet, dass bei allen zulässigen Betriebsbedingungen ein Beschlagen, beispielsweise der Glasscheibe des Kraftfahrzeugs, vermieden wird.

Weiterhin ist von Vorteil, dass in dem Anschlussraum ein trockenes Gas vorgesehen ist. Hierdurch kommt es während des Montageprozesses weiter zur Minimierung der eingeschlossenen Wasserdampfmenge.

Weiterhin ist von Vorteil, dass an der, der Scheibe zugewandten Fläche der Verbindungsvorrichtung Befestigungsnoppen vorgesehen sind. Hierdurch ist es erfindungsgemäß besonders einfach und kostengünstig möglich, die Verbindungsvorrichtung an verschiedene Scheiben anzupassen.

Witerhin ist von Vorteil, dass in dem Anschlussraum ein optisch-und NIR-transparentes (Near InfraRed), kondensiertes Medium vorgesehen ist. Hierdurch wird die Möglichkeit von Beeinträchtigungen, beispielsweise durch Beschlagen einer Scheibe, weiter vermindert.

Gemäß Anspruch 1 wird der Unterdruck durch Erwärmen des Inneren des Anschlussraums, anschließendes Abdichten des Anschlussraums und nachfolgendes Abkühlen des Inneren des Anschlussraums erzeugt. Hierdurch ist es in besonders einfacher Weise möglich, den erfindungsgemäßen Unterdruck im Anschlussraum zu erzeugen.

### Zeichnung

Ein Ausführungsbeispiel der Erfindung ist in der Zeichnung dargestellt und in der nachfolgenden Beschreibung näher erläutert. Es zeigen
Figur 1 ein mit einer Glasscheibe verbundenes beziehungsweise an einer Glasscheibe nach Anspruch 1 fixiertes Mess-System,
Figur 2 eine schematische Explosionszeichnung der Fixierung des Mess-Systems an der Glasscheibe,
Figur 3 den Fügeschritt zwischen Adapter und Scheibe,
Figur 4 das Einpressen des Messmittel in den Adapter und das Erzeugen eines Unterdrucks,
Figur 5 die dreiseitige Darstellung des Aufnahmeadapters für den Scheibenanschluss von Messmitteln.

### Beschreibung des Ausführungsbeispiels

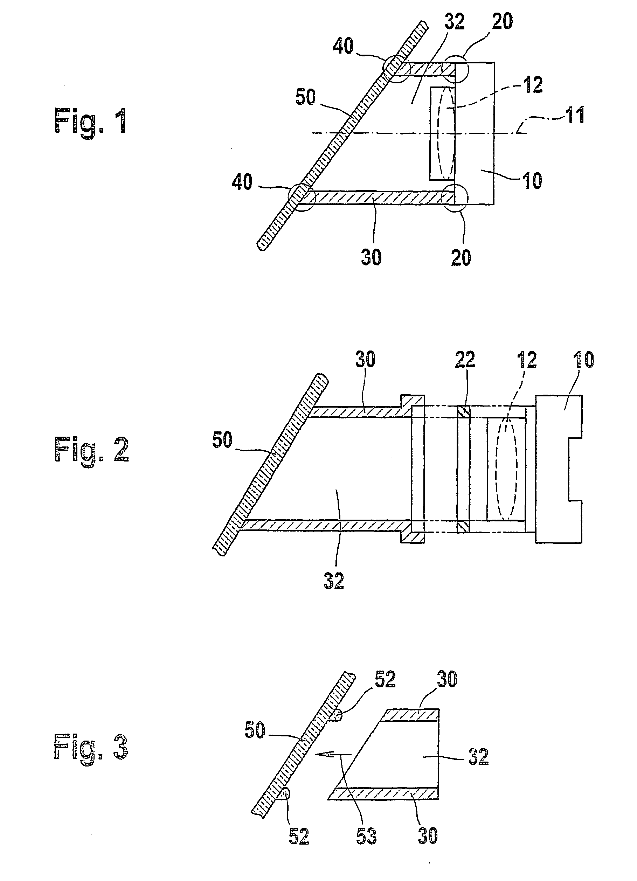

In Figur 1 ist eine Vorrichtung 30 dargestellt, durch welche die Fixierung eines Mess-Systems 10 an einer Glasscheibe 50 erfindungsgemäß ermöglicht wird. Das Mess-System 10 wird im folgenden auch als Sensormittel 10 bezeichnet. Bei der Scheibe 50 kann es sich dabei insbesondere um die Scheibe eines Kraftfahrzeugs handeln, insbesondere die Windschutzscheibe. Das Sensormittel 10 umfaßt insbesondere eine optische Achse, welche in Figur 1 mit einer gestrichelten Linie und dem Bezugszeichen 11 versehen ist. Weiterhin umfaßt das Sensormittel 10 eine Optik, welche in der Figur 1 als gestrichelt gezeichnete Andeutung einer Linse dargestellt ist und mit dem Bezugszeichen 12 versehen ist. Die Vorrichtung 30 zur Fixierung des Sensormittels 10 an der Glasscheibe 50 wird im folgenden auch als Adapter 30 bzw. als Verbindungsvorrichtung 30 bezeichnet. Parallel zur optischen Achse 11 ist der Adapter 30 im Wesentlichen rotationssymmetrisch vorgesehen. Die Verbindung des Adapters 30 mit der Glasscheibe 50 ist insbesondere entlang einer gekrümmten Kurve vorgesehen, welche insbesondere eine ovale Gestalt aufweist. Den Verbindungsbereich zwischen dem Adapter 30 und der Glasscheibe 50 ist in der Figur 1 mit dem Bezugszeichen 40 versehen. In diesem Bereich ist der Adapter 30 und die Glasscheibe 50 in abdichtender Weise zu verbinden. Ebenso gibt es eine Verbindungsfläche zwischen dem Adapter 30 und dem Sensormittel 10, welche in Figur 1 mit dem Bezugszeichen 20 versehen ist. Auch diese Verbindungsfläche ist abgedichtet vorgesehen. Insgesamt entsteht durch die Abdichtungen in den Bereichen 20 und 40 ein abgeschlossenes Volumen zwischen dem Sensormittel 10 und der Glasscheibe 50, welches in Figur 1 mit dem Bezugszeichen 32 versehen ist. Das abgeschlossene Volumen 32 wird im folgenden auch als Anschlussraum 32 zwischen dem Sensormittel 10 und der Glasscheibe 50 bezeichnet. Erfindungsgemäß ist es vorgesehen, in dem Anschlussraum 32 einen Unterdruck vorzusehen. Dieser Unterdruck sollte erfindungsgemäß in allen zugelassenen Betriebsbedingungen vorhanden sein, d.h., es sollte sich bei allen möglichen Betriebssituationen ein Druck im Anschlussraum 32 einstellen, welcher geringer ist als der atmosphärisch Druck.

In Figur 2 ist eine schematische Explosionszeichnung der Fixierung der Sensormittel 10 an der Glasscheibe 50 dargestellt. Wiederum ist die Glasscheibe 50, der Adapter 30, der Anschlussraum 32 und das Messmittel 10 beziehungsweise das Sensormittel 10 mit seinem optischen System 12 dargestellt. Zwischen dem Adapter 30 und dem Sensormittel 10 ist in besonders vorteilhafter Weise ein Dichtring 22 vorgesehen, welcher den in Figur 1 dargestellten Verbindungsbereich 20 zwischen dem Adapter 30 und dem Sensormittel 10 abdichtet.

In Figur 3 ist bezüglich des erfindungsgemäßen Verfahrens zur Fixierung eines Sensormittels 10 ein Fügeschritt des Adapters 30 an die Scheibe 50 dargestellt. Der Adapter 30 wird insbesondere durch Kleben oder durch Binden an der Scheibe 50 fixiert. Hierzu ist beispielsweise vorgesehen, auf die Scheibe 50 eine Kleberaupe 52 aufzubringen und anschließend den Adapter 30 auf die Kleberaupe 52 aufzusetzen, wobei das Aufsetzen durch die Bewegung des Adapters 30 in eine mittels eines mit dem Bezugszeichens 53 versehenen Pfeils dargestellt ist. Durch das Anbringen des Adapters 30 an der Glasscheibe 50 entsteht ein formschlüssiger und dichter Anschluß des Adapters 30 an der Glasscheibe 50.

Es ist insbesondere vorgesehen, nach dem Anbringen des Adapters 30, welcher im folgenden auch als Montageadapter 30 bezeichnet wird, eine Reinigung des in diesem Verfahrensstadium noch offenen Anschlussraums 32 vorzunehmen. Nach der Reinigung ist es insbesondere vorgesehen, den Anschlussraum 32 mittels eines Pellikels zu verschließen, d.h. eine Foliendichtung auf den Adapter 30 aufzubringen.

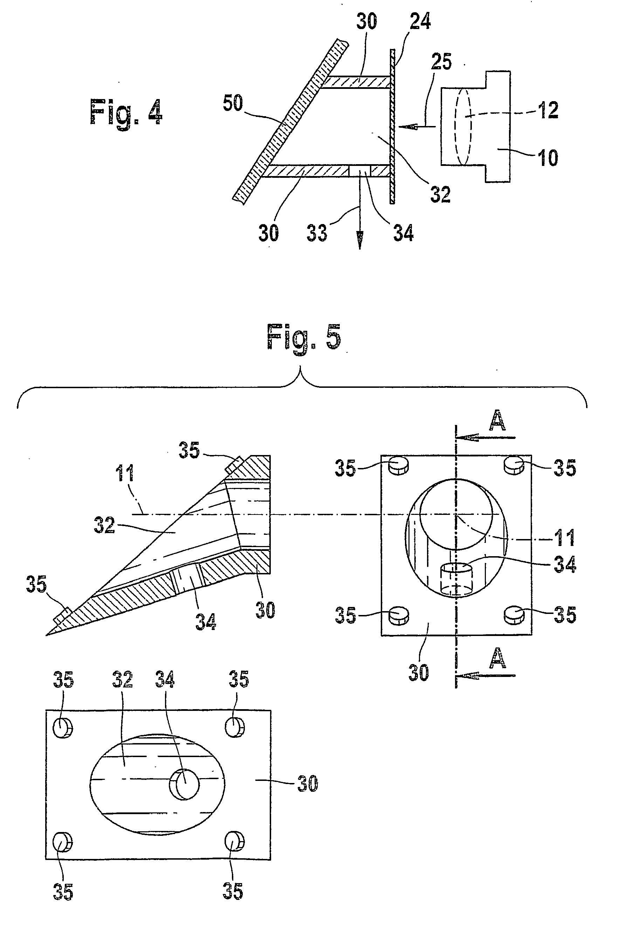

In Figur 4 sind weitere Verfahrensschritte zur Fixierung des Sensormittels 10 an der Glasscheibe 50 dargestellt. Das Sensormittel 10 wird insbesondere zunächst durch die Foliendichtung, welche in Figur 4 mit dem Bezugszeichen 24 versehen ist, hindurch gedrückt. Hierbei wird die Foliendichtung 24 zumindest teilweise zerstört. Alternativ hierzu ist es auch vorgesehen, die Foliendichtung 24, welche nach der Reinigung des Anschlussraums 32 angebracht wurde, vor dem Einbringen des Messmittels 10 zu entfernen und nicht zu zerstören. In einem weiteren Verfahrensschritt wird dann das Messmittel 10 an eine Dichtfläche zwischen Adapter 30 und Messmittel 10 angepresst. Hierzu ist es vorgesehen, den in Figur 2 dargestellten aber nicht in Figur 4 dargestellten Dichtring 22 zu verwenden oder es alternativ auch vorgesehen, eine in Figur 4 nicht dargestellte Kleberaupe oder eine formschlüssige Anlagefläche vorzusehen. Für alle Alternativen ist es jedoch vorgesehen, dass eine Grunddichtigkeit zwischen dem Adapter 30 und dem Messmittel 10 gegeben ist und eine Grobpositionierung des Messmittels 10 relativ zum Adapter 30 vorgenommen ist.

In einem weiteren, nicht im Rahmen der Erfindung liegenden Verfahrensschritt zur Herstellung der Fixierung ist es vorgesehen, den Anschlussraum 32 zumindest teilweise zu evakuieren. Dies wird insbesondere dadurch erreicht, dass in dem Adapter eine in Figur 4 dargestellte Öffnung 34 vorgesehen ist, durch welche ein Teil des im Anschlussraum 32 befindlichen Mediums aus dem Anschlussraum 32 entfernbar ist. Dies ist in Figur 4 mittels eines mit dem Bezugszeichen 33 versehenen Pfeils dargestellt. Durch die Erzeugung des Unterdrucks in dem Anschlussraum 32 ist es vorgesehen, den Fügeprozeß des Messmittels 10 in den Adapter 30 zu unterstützen und - bei entsprechender Ausformung der Anschlußstelle zwischen dem Adapter 30 und dem Messmittel 10 - auch eine Feinpositionierung und/oder eine Selbstjustage des Messmittels 10 auf den Adapter 30 vorzusehen.

Als Befestigungsmethode zwischen dem Adapter 30 und dem Messmittel 10 ist es insbesondere vorgesehen, das Messmittel 10 einzuschrauben, einzupressen, einzuschnappen, zu kleben, mittels eines Bajonettverschlusses zu befestigen, zu klemmen oder auch zu schrumpfen. Die Dichtfläche im in Figur 1 dargestellten Verbindungsbereich 20 zwischen dem Adapter 30 und dem Messmittel 10 ist insbesondere alternativ als Metalldichtung, als keramische Dichtung, als O-Ring, als Klebe- oder Kitt-Masse oder als Schrumpfschlauch vorgesehen. In Abhängigkeit der gewählten Befestigungsmethode beziehungsweise der gewählten Ausführung der Dichtfläche zwischen dem Adapter 30 und dem Messmittel 10 muß der Abdichtvorgang entweder thermisch unterstützt werden - beispielsweise durch die Aushärtung eines Klebers - oder chemisch unterstützt werden - beispielsweise mittels einer chemischen Reaktion bei einem Mehrkomponentenkleber, einem UV-Aushärten - oder mechanisch unterstützt werden - beispielsweise durch Verformung, durch Reibschweißen oder dergleichen. Es ist erfindungsgemäß insbesondere vorgesehen, eine Befestigungsmethode beziehungsweise eine Dichtmethode zu verwenden, welche wieder lösbar ausgeführt werden kann.

Ein Dichter wird, beziehungsweise abgedichteter Anschluß des Messmittels 10 an die Glasscheibe 50 hergestellt, wobei sowohl die Montage des Messmittels 10 an der Glasscheibe 50 als auch die Fixierung des Messmittels 10 an der Glasscheibe 50 mittels Unterdruck in dem Anschlussraum 32 unterstützt wird. Die klimatischen Bedingungen während des Einbaus des Messmittels 10 an der Glasscheibe 50 bestimmen die Qualität der Messung des Messmittels 10 im Betrieb. Im Messbetrieb des Messmittels 10 stören insbesondere eingeschlossene Partikel, die sich auf optischen Flächen, beispielsweise im Durchsichtbereich oder auf Linsen, niederschlagen können. Weiterhin stört Feuchtigkeit, welche bei Klimawechsel auf optischen Flächen kondensieren kann oder zur Vereisung führen kann.

Der Fügeprozeß beziehungsweise der Montageprozeß des optischen Messmittels 10, der justiert durchgeführt werden muß, kann durch einen lokalen Unterdruck im Anschlussraum 32 unterstützt werden, wobei darüberhinaus die Haltbarkeit der Verbindung des Messmittels 10 mit der Glasscheibe 50 verbessert wird. Die Justierung des optischen Messmittels 10 wird insbesondere mittels des vormontierten Adapters 30 vorgenommen. Der Unterdruck im Anschlussraum 32 wird erfindungsgemäß unter allen zulässigen Fertigungs- und Betriebsbedingungen - insbesondere was Temperatur- und Außendruckschwankungen angeht - aufrecht erhalten.

Das im Anschlussraum 32 verbliebene Gasvolumen enthält erfindungsgemäß keine reaktiven Gasanteile, die zu störenden Oberflächenveränderungen an den optischen Oberflächen führen. Weiterhin enthält das im Anschlussraum 32 verbliebene Gasvolumen nur so viel Wasserdampf, dass dieses entweder unter den spezifizierten Betriebsbedingungen nicht kondensiert, d.h. die relative Luftfeuchte verbleibt unterhalb von 100%, oder jedoch an unkritischen Flächen, beispielsweise sogenannte Gitterflächen, kondensiert. Solche Gitterflächen sind durch die konstruktive Auslegung des Adapters 30 zur Vermeidung der Betauung der optisch aktiven Flächen vorgesehen. Der im Anschlussraum 32 trotzdem vorhandene Wasserdampf kann daher beispielsweise an den Gitterflächen gebunden werden. Die spezifizierten Betriebsbedingungen sind insbesondere durch die Definition einer minimalen und einer maximalen Betriebstemperatur und durch die Definition eines minimalen und eines maximalen Betriebsumgebungsdrucks definiert. Insbesondere ist vorgesehen, als minimale Betriebstemperatur eine Temperatur von -40°C vorzusehen.

Es ist insbesondere vorgesehen, dass die Verbindung zwischen dem Adapter 30 und der Glasscheibe 50 beziehungsweise die Verbindung zwischen dem Messmittel 10 und dem Adapter 30 lösbar ist, wobei der vorgesehene Unterdruck im Anschlussraum 32 beispielsweise zu Wartungszwecken aufgehoben werden kann. Die Erzeugung des Unterdrucks im Anschlussraum 32 wird erfindungsgemäß durch die Erwärmung des Gasvolumens im Anschlussraum 32 auf eine Temperatur oberhalb der zulässigen Betriebstemperatur und ein anschließendes Abkühlen des Gasvolumens durchgeführt werden. Nach der Erwärmung und vor dem Abkühlen muß der Anschlussraum 32 abgedichtet werden. Hierdurch entsteht während des Abkühlvorgangs in dem Gasvolumen des Anschlussraumes 32 ein Unterdruck, welcher solange aufrecht erhalten wird, wie die Temperatur der Anordnung nicht die maximal zulässige Temperatur der Betriebsbedingung überschreitet. In einem weiteren, nicht im Rahmen der Erfindung liegenden Verfahrensschritt kann das Vakuum im Anschlussraum 32 durch die Evakuierung des Anschlussraumes 32 mittels eines in der Figur 4 dargestellten Ventils beziehungsweise einer Öffnung 34 durchgeführt werden. Hierzu ist es vorgesehen, dass die aktive Evakuierung des Anschlussraumes 32 zur Unterstützung des Justage- und Fügeprozeßes zwischen dem Adapter 30 und dem Messmittel 10 beiträgt.

Erfindungsgemäß wird insbesondere die Verschmutzung des Anschlussraumes 32 vermieden, insbesondere die Verschmutzung mit Staub, Feuchtigkeit und dergleichen.

Es kann weiterhin vorgesehen sein, durch die Zuführung von "trockenen" inerten Purge-Gasen - die im folgenden auch als Spül-Gase bezeichnet werden - , wie beispielsweise N₂-Gas, während des Montageprozeßes eine Minimierung der eingeschlossenen Wasserdampfmenge zu erhalten. Alternativ kann es insbesondere vorteilhaft vorgesehen sein, die Beaufschlagung des Purge-Gases mit einem geringen Überdruck während des Fügeprozeßes vorzusehen, so dass es zu einem Freiblasen des Adapters 30 beziehungsweise des Anschlussraumes 32 kommt. Anschließend wird wiederum der Anschlussraum 32 evakuiert. Erfindungsgemäß sollte darauf geachtet werden, dass für den Anschlussraum 32 beziehungsweise für Komponenten, die an den Anschlussraum 32 angrenzen, nichtgasende Materialien zu verwenden. Alternativ zum Evakuieren des Anschlussraumes ist es ebenfalls vorgesehen, eine blasenfreies Befüllen des Anschlussraumes 32 mit einem optisch und - je nach Anwendungsfall - auch NIR-Transparenten, inerten, flüssigen Mediums durchzuführen. Auch bei der Verwendung eines flüssigen Mediums ist es erfindungsgemäß vorgesehen, einen Unterdruck zusätzlich aufzubauen. Hierbei besteht allerdings die Gefahr der Blasenbildung durch Ausgasen. Falls der Adapter 30 nicht steif vorgesehen ist, wird sich der Unterdruck in einer Durchbiegung seiner Wände manifestieren. Hiermit ist es auch vorteilhaft möglich, eine verstärkende Kraft auf die Verbindungen, insbesondere Klebeverbindungen, zur Scheibe 50 zu realisieren.

In Figur 5 ist eine dreiseitige Darstellung eines Aufnahmeadapters 30 dargestellt. Der Aufnahmeadapters 30 dargestellt. Der Aufnahmeadaper 30 umfaßt den Anschlußraum 32, die Öffnung 34 zum Evakuieren und eine Anzahl von Befestigungsnoppen, die in Figur 5 alle mit dem Bezugszeichen 35 bezeichnet sind. Im rechten oberen Teil der Figur 5 ist eine Ansicht des Aufnahmeadapters 30 dargestellt, wobei die Projektionsrichtung für die Darstellung mit der optischen Achse 11 zusammenfällt und wobei eine Schnittlinie A-A eingereichtet ist. Im oberen linken Teil der Figur 5 ist eine Schnittdarstellung des Aufnahmeadapters 30 entlang der Schnittlinie A-A dargestellt. Erkennbar ist wiederum die optische Achse 11. Im unteren Teil der Figur 5 ist eine Draufsicht auf den Aufnahmeadapter 30 dargestellt.

Die Befestigungsnoppen 35 sind an verschiedenen Stellen auf der Anschlußfläche des Aufnahmeadapters 30 an die Windschutzscheibe, die in Figur 5 nicht dargestellt ist, vorgesehen. Die Befestigungsnoppen 35 sind zu dem Zweck vorgesehen, die Position des Aufnahmeadapters relativ zur Windschutzscheibe genau zu definieren. Die in Figur 3 aber nicht in Figur 5 dargestellte Kleberaupe 52 ist dabei derart vorgesehen, dass sie den Zwischenraum zwischen dem Aufnahmeadapter 30 und der Windschutzscheibe an den Stellen des Aufnahmeadapters 30, an denen sich keine Befestigungsnoppen 35 befinden, ausfüllt. Die Befestigungsnoppen 35 sind derart vorgesehen, dass sie an verschieden geformte Windschutzscheiben anpassbar ausgelegt sind. Insbesondere kann ihre Höhe und ihre Wölbung variiert werden. Hierdurch ist es möglich, die Grundform des Aufnahmeadapters 30 auch bei seiner Verwendung bei verschieden geformten Windschutzscheiben unverändert beizubehalten und trotzdem eine genaue Justierung des Aufnahmeadapters und eine genaue Positionierung des Aufnahmeadapters zu erzielen. Dies hat insbesondere den Vorteil, dass Werkzeuge, beispielsweise zum Spritzgiessen, hinsichtlich des Aufnahmeadapters oder zumindest hinsichtlich des größten Teils des Aufnahmeadapters 30 unverändert verwendet werden können, was zu niedrigeren Produktionskosten führt. Die Anpassung an unterschiedliche Formen von Scheiben erfolgt durch die Anpassung der Höhe und Wölbung bzw. der Höhe und der Form der Befestigungsnoppen 35, was entweder keine Änderung des Produktionswerkzeugs des Aufnahmeadapters 30 oder zumindest nur marginale Änderungen des Produktionswerkzeugs des Aufnahmeadapters mit sich bringt.

## Patentansprüche

1. Verfahren zur Fixierung eines Sensormittels (10) relativ zu einer Scheibe (50) eines Kraftfahrzeugs, wobei eine Verbindungsvorrichtung (30) zwischen dem Sensormittel (10) und der Scheibe (50) angeordnet wird, wodurch ein Anschlussraum (32) definiert wird, wobei in dem Anschlussraum (32) ein Unterdruck erzeugt wird, **dadurch gekennzeichnet, dass** der Unterdruck durch Erwärmen des Inneren des Anschlussraums (32), anschließendes Abdichten des Anschlussraums (32) und nachfolgendem Abkühlen des Inneren des Anschlussraums (32) erzeugt wird.

2. Verfahren nach Anspruch 1, **dadurch gekennzeichnet, dass** in dem Anschlussraum (32) ein optisch und/oder ein NIR-transparentes, kondensiertes Medium vorgesehen ist.

## Claims

1. Method for fixing a sensor means (10) in relation to a screen (50) of a motor vehicle, a connection device (30) being arranged between the sensor means (10) and the screen (50), with the result that a junction space (32) is defined, a vacuum being generated in the junction space (32), **characterized in that** the vacuum is generated by the heating of the interior of the junction space (32), the subsequent sealing-off of the junction space (32) and the following cooling of the interior of the junction space (32) .

2. Method according to Claim 1, **characterized in that** a visually and/or NIR-transparent condensed medium is provided in the junction space (32).

## Revendications

1. Procédé de fixation d'un capteur (10) à une vitre (50) de véhicule automobile selon lequel on installe un dispositif de liaison (30) entre le capteur (10) et la vitre (50), définissant un volume de raccordement (32) et dans ce volume de raccordement (32) on crée une dépression,
**caractérisé en ce qu'**
on génère la dépression en chauffant l'intérieur du volume de raccordement (32) puis on ferme de manière étanche ce volume (32) et ensuite on refroidit l'intérieur du volume de raccordement (32).

2. Procédé selon la revendication 1,
**caractérisé par**
un milieu optique et/ou un milieu transparent au proche ingrarouge NIR, condensé dans le volume de raccordement (32).
